# EUROPÄISCHE PATENTANMELDUNG

(11) **EP 0 831 582 A2**
(43) Veröffentlichungstag der Anmeldung: **25.03.1998**
(21) Anmeldenummer: 97116049.4
(22) Anmeldetag: 16.09.1997
(51) Int. Cl.: H02P 13/06

(54) **Einrichtung zur Anpassung eines Verbrauchers an die einspeisende Netzspannung**

(30) Priorität: 24.09.1996 DE 19639163
(71) Anmelder: VEBA KRAFTWERKE RUHR AKTIENGESELLSCHAFT, 45896 Gelsenkirchen (DE)
(72) Erfinder: Kaufung, Michael, 45701 Herten (DE)
(74) Vertreter: Cohausz & Florack

(57) **Zusammenfassung**

Die Erfindung betrifft eine Einrichtung zur Anpassung eines mit mehreren unterschiedlichen Betriebsspannungswerten betreibbaren Verbrauchers 2 an die einspeisende Netzspannung 1, wobei dem Verbraucher 2 eine der Anzahl der möglichen Betriebsspannungswerte entsprechende Zahl einzeln auswählbarer, parallel zueinander angeordneter Spannungswandler 3 vorgeordnet sind. Zur Herabsetzung des Aufwandes für die Spannungsumschaltung sowie zur Verbesserung der Betriebssicherheit ist erfindungsgemäß vorgesehen, daß Detektormittel 4 zur Messung der Netzspannung 1 sowie von den Detektormitteln 4 ansteuerbare Schaltmittel 5 vorgesehen sind, mit denen der jeweils dem Wert der einspeisenden Netzspannung zugeordnete Spannungswandler selbsttätig aktivierbar ist.

## Beschreibung

Die Erfindung betrifft eine Einrichtung zur Anpassung eines mit mehreren unterschiedlichen Betriebsspannungswerten betreibbaren Verbrauchers an die einspeisende Netzspannung, wobei dem Verbraucher eine der Anzahl der möglichen Betriebsspannungswerte entsprechende Zahl einzeln auswählbarer, parallel zueinander angeordneter Spannungswandler vorgeordnet sind.

Verbraucher unterschiedlicher Art, beispielsweise elektrische Maschinen oder andere Elektrogroßgeräte wie Kompressoren, Meß- oder Bauwagen sowie Schweißmaschinen, aber auch Geräte der Audioelektronik, sind üblicherweise für verschiedene Betriebsspannungen ausgelegt. Einerseits ergeben sich diese Anforderungen für die Möglichkeit zum Betrieb des Gerätes in verschiedenen Ländern, die über unterschiedliche Netzspannungen verfügen. Andererseits kann der Wert der Netzspannung je nach Lastfall variiert werden, wobei innerhalb eines Betriebes beispielsweise Spannungswerte von 230V, 400V oder 500V alternativ als einspeisende Netzspannungen zur Verfügung stehen. Die Anpassung des Verbrauchers erfolgt herkömmlicherweise dadurch, daß einer der dem Verbraucher vorgeordneten Spannungswandler, der auf die einspeisende Netzspannung angepaßt ist, durch entsprechende interne Verschaltung mit dem einspeisenden Netz verbunden wird. Die hierdurch ausgewählte Betriebsspannung wird dabei üblicherweise durch Art und/oder Farbe des Netzsteckers markiert.

Das Umrüsten eines Verbrauchers von einem Betriebsspannungswert zu einem anderen ist dabei einerseits aufwendig, da das Gerät geöffnet werden muß, die entsprechenden Verschaltungen vorgenommen werden müssen und anschließend der Stecker an die ausgewählte Betriebsspannung angepaßt werden muß. Andererseits verbleiben dabei Fehlerquellen, die insbesondere bei dem Einsatz von ungeschultem bzw. betriebsfremdem Personal eine fehlerhafte Anpassung zwischen Betriebsspannung und Netzspannung zur Folge haben können. Hierdurch wird der Verbraucher im Extremfall zerstört.

Der Erfindung liegt die Aufgabe zugrunde, eine Einrichtung der eingangs genannten Art dahingehend weiterzuentwickeln, daß einerseits der Aufwand für die Betriebsspannungsumwandlung des Verbrauchers reduziert und andererseits die Sicherheit gegen Fehler erhöht wird.

Diese Aufgabe wird erfindungsgemäß bei einer Einrichtung der eingangs genannten Art dadurch gelöst, daß Detektormittel zur Messung der Netzspannung sowie von den Detektormitteln ansteuerbare Schaltmittel vorgesehen sind, mit denen der jeweils dem Wert der einspeisenden Netzspannung zugeordnete Spannungswandler selbsttätig aktivierbar ist.

Die Erfindung zeichnet sich dadurch aus, daß die Auswahl des zutreffenden Spannungswandlers durch die Schaltmittel automatisch erfolgt, je nachdem, welchen Wert der einspeisenden Netzspannung die den Schaltmitteln vorgeordneten Detektormittel feststellen. Diese Lösung ermöglicht eine praktisch beliebige Anpassung an die jeweiligen Betriebsbedingungen durch die entsprechende Dimensionierung der Schaltmittel.

Eine bevorzugte Ausführungsform sieht vor, daß die Schaltmittel elektromechanische Schaltelemente sind. Im Unterschied zu elektronischen Schaltmitteln benötigen diese keine zusätzliche stabilisierte Hilfsspannung. Vielmehr kann das Spannungssteuersignal direkt von der einspeisenden Netzspannung ohne weitere Maßnahmen zur Stabilisierung abgeleitet werden. Außerdem erreicht man durch den Einsatz von passiver Elektronik in Verbindung mit hoch zuverlässiger Elektromechanik eine Störfestigkeit der Auswahlschaltung, die bei Verwendung von Analogelektroniken bzw. MC-Technik ohne sehr kostenintensive Störfestigkeitsmaßnahmen (EMV-Maßnahmen) nicht erreichbar sind. Leitungsgebundene (Oberschwingungen) und nicht leitungsgebundene (Störfelder, Transienten) Störgrößen, die bei dem Einsatz in energiestarker Umgebung (Kraftwerke, Schaltanlagen, Lichtbögen etc.) der Regelfall sind, bewirken keine Fehlfunktionen.

Die Sicherheit der erfindungsgemäßen Vorrichtung wird in einer weiter bevorzugten Ausführungsform dadurch erhöht, daß die Schaltmittel Spannungsrelais mit gegenseitiger Verriegelung sind.

Eine weitere die Sicherheit erhöhende Maßnahme besteht darin, daß den Schaltmitteln Verzögerungsmittel zur Verzögerung der Aktivierung des jeweiligen Spannungswandlers zugeordnet sind.

Weitere bevorzugte Ausführungsformen ergeben sich aus den nachfolgenden Unteransprüchen.

Die Erfindung wird nunmehr anhand einer ein Ausführungsbeispiel darstellenden Zeichnung näher erläutert.

Dabei zeigen:
- Fig. 1: ein Prinzipschaltbild zur Erläuterung der Funktionsweise der erfindungsgemäßen Vorrichtung,
- Fig. 2: einen detaillierten Schaltplan des Ausführungsbeispiels der Erfindung.

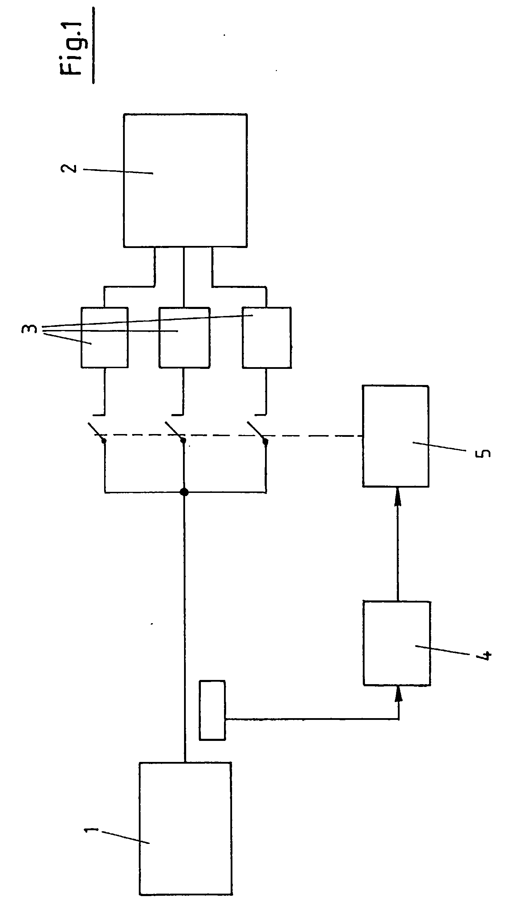

Bezug nehmend auf Fig. 1 ist mit dem Bezugszeichen 1 symbolisch ein Spannungsnetz veranschaulicht, an welches ein Verbraucher 2 anschließbar ist. Das Spannungsnetz 1 kann insbesondere ein Dreiphasennetz sein, welches Netzspannungen von 230V, 400V oder 500V erzeugt. Der Verbraucher 2 ist allgemein betrachtet eine elektrische Maschine, beispielsweise eine Schweißmaschine oder ein anderes Arbeitsgerät mit hoher Leistung.

Die Kopplung zwischen Netz 1 und Verbraucher 2 erfolgt unter Zwischenschaltung von einem der Spannungswandler 3. Dabei sind mehrere solcher Spannungswandler 3 parallel zueinander angeordnet, wobei jeder der Spannungswandler an eine bestimmte Betriebsspannung des Verbrauchers 2 angepaßt ist. Jedem Spannungswandler 3 ist eine Schaltereinrichtung vorgeordnet. Der jeweilige Schalter wird von Schaltmitteln 5 ausgewählt. Die Ansteuerung der Schaltmittel 5 erfolgt dabei durch eine Detektorschaltung 4, die am Ausgang des Netzes 1 die dort vorliegende Spannung mißt. Abhängig vom gemessenen Spannungswert wird durch die Schaltmittel 5 die Auswahl des zutreffenden Spannungswandlers 3 vorgenommen und damit die Verbindung zwischen Netz 1 und Verbraucher 2 hergestellt.

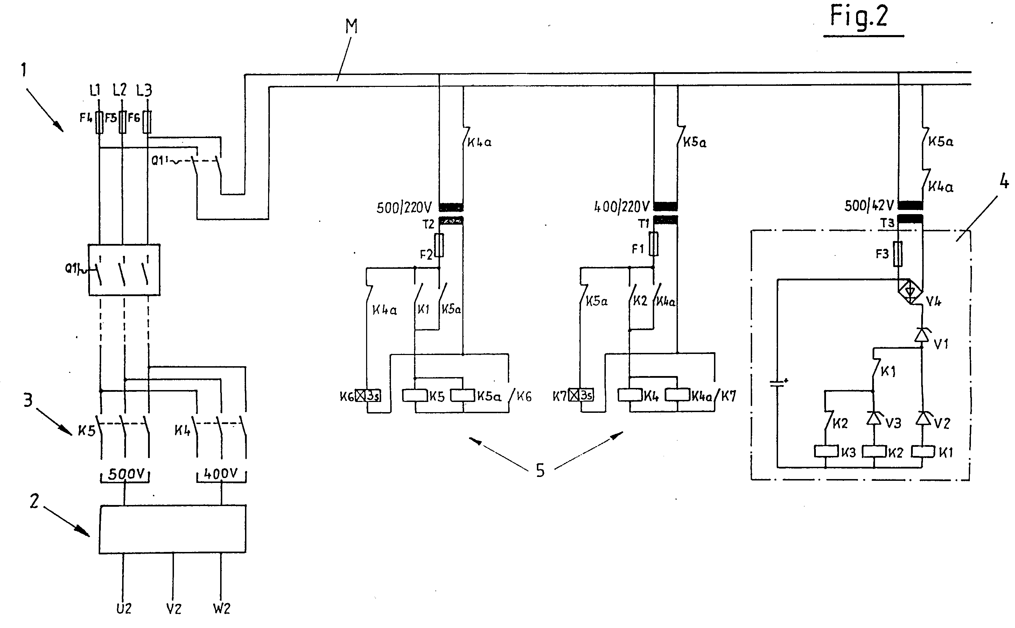

Die in Fig. 2 dargestellte detaillierte elektrische Schaltung der erfindungsgemäßen Einrichtung enthält Blöcke 1 bis 5, welche denjenigen von Fig. 1 entsprechen. Am Ausgang des Netzes 1 mit den Phasenspannungen L1, L2, L3 befinden sich Sicherungselemente F4, F5, F6. Den Eingang zu der den Verbraucher bildenden elektrischen Maschine bildet ein dreiphasiger Hauptschalter Q1. Diesem nachgeordnet sind parallel zueinander zwei Spannungswandler 3 angeordnet, von denen der eine auf eine Betriebsspannung von 500V und der andere auf eine Betriebsspannung von 400V ausgelegt ist.

Diesem nachgeordnet ist der Verbraucher 2, dargestellt durch den Maschinenhaupttransformator und die Verbraucherspannungen U2, V2 und W2.

Die Aktivierung eines der beiden Spannungswandler 3 erfolgt jeweils durch Betätigung eines der Schütze K4 oder K5, wie dies im folgenden erläutert wird.

Am Ausgang des Netzes 1 erfolgt zweiphasig eine Spannungsmessung über eine Meßleitung M, an der parallel zueinander sowohl Detektormittel 4 als auch Schaltmittel 5 angeschlossen sind. Dabei sind zwei Schaltmittelgruppen gebildet, von denen die in der Figur 2 dargestellte linke Gruppe der Betriebsspannung von 500V und die rechte Gruppe der Betriebsspannung von 400V zugeordnet sind.

Die Detektormittel 4 bestehen aus einem Spannungstransformator T3, der über Schalter K5a, K4a an die Meßleitung M angeschaltet wird. Sekundärseitig wird die Spannung des Transformators T3 gleichgerichtet. Durch die Dimensionierung der Zenerdioden V1, V2, V3, die mit Schaltrelais K1, K2, K3 zusammenwirken, ergeben sich unterschiedliche Schwellspannungswerte. Hierdurch zieht je nach am Eingang des Transformators T3 liegender Spannung eines der drei Spannungsrelais K1, K2, K3 an, wobei K1 einem Spannungswert von 500V, K2 einem Spannungswert von 400V und K3 einem Spannungswert von 230V zugeordnet sind. Die Spannungsrelais sind dabei gegenseitig verriegelt.

Die beiden parallel zueinander ausgebildeten Schaltmittel sind jeweils äquivalent aufgebaut. Über Transformatoren T1, T2 wird die jeweilige Spannung auf der Meßleitung M transformiert und auf die Schütze K4 bzw. K5 unter jeweiliger gegenseitiger Verriegelung übertragen. Ergänzend dazu befinden sich Verzögerungselemente K6 bzw. K7, die die Funktion der Schütze K4, K5 erst nach einer Verzögerungszeit (von beispielsweise 3 Sekunden) bewirken.

Die Funktion der erfindungsgemäßen Schaltung wird im folgenden erläutert:

Unter der Annahme, daß die Ausgangsspannung des einspeisenden Netzes 1 400V beträgt, spricht in den Detektormitteln 4 das mittlere Spannungsrelais K2 an. Die übrigen Spannungsrelais K1 oder K3 sprechen nicht an. Hierdurch wird in der rechten Gruppe der Schaltmittel 5 der Schalter K2 geschlossen, wodurch nach Ablauf der entsprechenden Verzögerungszeit das Schütz K4 anzieht und somit der dem Verbraucher 2 vorgeordnete Spannungswandler 3 mit der Betriebsspannung 400V aktiviert wird.

Umgekehrt wird bei einer Netzspannung von 500V, die auf der Meßleitung detektiert wird, das Spannungsrelais K1 aktiviert, wodurch die linke Gruppe der Schaltmittel so betätigt wird, daß der Schalter K1 geschlossen und das Schütz K5 betätigt wird. Hierdurch wird der Spannungswandler 3 mit der Betriebsspannung von 500V vor dem Verbraucher 2 zugeschaltet.

Durch die erfindungsgemäße Vorrichtung wird also realisiert, daß falsch zugeordnete, insbesondere gefährdende Netzeingangsspannungen erkannt und rechtzeitig zum Schutz von Personen bzw. Geräten um- bzw. abgeschaltet werden. Die Schaltung stellt sicher, daß elektrische Maschinen, die für verschiedene Betriebsspannungen ausgelegt sind, automatisch an die einspeisende Netzspannung angepaßt werden. Nach Auswahl der richtigen Netzeingangsgröße schaltet die Einrichtung über die passenden Schaltrelais die entsprechenden Netz- und Steuertransformatoren zu.

## Patentansprüche

1. Einrichtung zur Anpassung eines mit mehreren unterschiedlichen Betriebsspannungswerten betreibbaren Verbrauchers (2) an die einspeisende Netzspannung (1), wobei dem Verbraucher (2) eine der Anzahl der möglichen Betriebsspannungswerte entsprechende Zahl einzeln auswählbarer, parallel zueinander angeordneter Spannungswandler (3) vorgeordnet sind,
**dadurch gekennzeichnet**, daß Detektormittel (4) zur Messung der Netzspannung (1) sowie von den Detektormitteln (4) ansteuerbare Schaltmittel (5) vorgesehen sind, mit denen der jeweils dem Wert der einspeisenden Netzspannung zugeordnete Spannungswandler (3) selbsttätig aktivierbar ist.

2. Einrichtung nach Anspruch 1,
**dadurch gekennzeichnet**, daß die Schaltmittel (5) elektromechanische Schaltelemente (K4, K5) sind, die ihr Steuerspannungssignal direkt von der gemessenen Netzspannung (1) ableiten.

3. Einrichtung nach Anspruch 1 oder 2,
**dadurch gekennzeichnet**, daß die Schaltmittel Spannungsrelais mit gegenseitiger Verriegelung sind.

4. Einrichtung nach einem der Ansprüche 2 oder 3,
**dadurch gekennzeichnet,** daß den Schaltmitteln (5) Verzögerungsmittel (K6, K7) zur Verzögerung der Aktivierung eines der Spannungswandler (3) zugeordnet sind.

5. Einrichtung nach einem der Ansprüche 1-4,
**dadurch gekennzeichnet**, daß die Netzspannungen 230V, 400V oder 500V betragen.

6. Einrichtung nach einem der Ansprüche 1-5,
**dadurch gekennzeichnet**, daß der Verbraucher ein Schutzgas-Schweißgerät ist.
